Europäisches Patentamt

European Patent Office

Office européen des brevets

(11) Publication number: **0 373 934**
**A2**

## EUROPEAN PATENT APPLICATION

(21) Application number: **89313088.0**

(51) Int. Cl.5: **G06K 7/10**

(22) Date of filing: **14.12.89**

(30) Priority: **15.12.88 US 284646**

(43) Date of publication of application:
**20.06.90 Bulletin 90/25**

(84) Designated Contracting States:
**DE FR GB**

(71) Applicant: **NCR CORPORATION**
**World Headquarters**
**Dayton, Ohio 45479(US)**

(72) Inventor: **Wike, Charles Kenneth, Jr.**
**59635 Heskett Drive**
**Cambridge Ohio 43725(US)**

(74) Representative: **Robinson, Robert George**
**International Patent Department NCR Limited**
**915 High Road North Finchley**
**London N12 8QJ(GB)**

(54) **Hand-held bar code reader.**

(57) A hand-held bar code reader includes an elongated casing having an opening at one end, and a light source (34) for projecting a beam to a composite optical element (38) mounted adjacent said opening. Reflecting surfaces (64, 66) of the optical element (38) reflect the beam on to a mirror (32) mounted on a rotatable shaft (30) driven by a motor (28) mounted inside the casing. The mirror (32) deflects the light beam in sequence to a series of further mirrors (42) mounted around the interior periphery of the casing, the further mirrors (42) serving to direct light beams in a scanning manner at a coded label through said opening in the casing. The optical element (38) also includes a collection portion (44) for focusing light reflected from the coded label on to a photodetector (48) which is mounted alongside the shaft (30) and which generates signals representing the data stored on the label. The invention achieves a compact form of construction for the reader.

**FIG. 4**

# HAND-HELD BAR CODE READER

This invention relates to optical bar code readers such as are used to read coded labels attached to purchased merchandise items.

In order to increase the speed of the checkout operation in supermarket and retail stores, optical scanning devices have been incorporated into checkout counters for reading a bar code pattern on labels affixed to purchased merchandise items. Where the type of merchandise sold does not readily lend itself to being checked out utilizing a bar code reader mounted within a checkout counter, hand-held bar code readers have been used wherein the checkout operator positions the bar code reader adjacent the coded label attached to the merchandise item.

It is an object of the invention to provide a hand-held optical bar code reader which is of compact construction.

It is a further object of the invention to provide a hand-held optical bar code reader which is light in weight.

According to the invention there is provided a hand-held optical bar code reader for projecting scanning light beams at a bar code and detecting the light reflected from the bar code, characterized by an elongated casing having an opening at one end, light source means mounted in said casing for projecting a light beam towards said one end, first reflecting means mounted adjacent said one end of said casing for reflecting said light beam away from said one end along a first axis to second reflecting means mounted on a rotatable member mounted in said casing, said first axis being substantially coincident with the axis of rotation of said rotatable member, a plurality of third reflecting means mounted around the interior periphery of said casing adjacent said one end, said second reflecting means being arranged in operation to deflect the received light beam in sequence to said plurality of third reflecting means, said third reflecting means serving to direct scanning light beams in a scanning manner at said bar code through said opening, detecting means mounted in said casing adjacent said rotatable member, and collection means for collecting light reflected from said coded label and for focusing this reflected light on said detecting means, said detecting means being arranged to generate electrical signals representing data stored in said bar code in response to receiving light reflected from said bar code.

Two embodiments of the invention will now be described by way of example with reference to the accompanying drawings, in which:-

Fig. 1 is a perspective view of a hand held optical bar code reader in accordance with the present invention;

Fig. 2 is a diagrammatic representation of the components of the scanning system of a bar code reader in which these components are shown as separate elements;

Fig. 3 is a diagrammatic representation of the elements of the scanning system of a first embodiment of the present invention;

Fig. 4 is a front view of the bar code reader of Fig. 3;

Fig. 5 is a perspective view of a composite optical member of the reader of Figs. 3 and 4;

Fig. 6 is a diagrammatic representation of a second embodiment of the present invention; and

Figs. 7A-7D inclusive are diagrammatic representations of scanning patterns showing various focusing locations with respect to the focal plane through which a coded label moves.

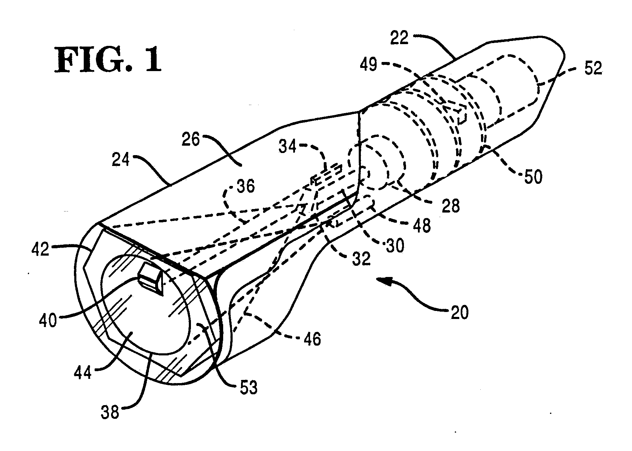

Referring to Fig. 1, the hand-held bar code reader shown therein is generally indicated by the numeral 20 and comprises an elongated casing 22 formed in a flashlight configuration and having a front generally cylindrical portion 24 which includes a top flat rearward extending surface 26, the casing 22 being open at the front end thereof. The flat surface 26 may be attached to the underside of the wrist of a checkout operator enabling the checkout operator to utilize both hands in moving purchased merchandise items on a checkout counter while still retaining the bar code reader in a position to scan a bar code represented by a coded label of a purchased merchandise item. Mounted within the casing 22 is a motor 28 which in operation of the reader 22 rotates a drive shaft 30 together with a scanning mirror 32 secured to the end of the drive shaft 30. Mounted adjacent the drive shaft 30 is a laser diode 34 which projects a laser light beam 36 towards a composite optical member 38 which includes a portion 40 comprising a pair of mirrors which redirect the light beam in a direction generally opposite to the direction of the light beam received from the diode 34 and towards the scanning mirror 32. Rotation of the scanning mirror 32 projects the light beam in sequence towards a number of mirrors 42 mounted on the inside peripheral surface of the front portion 24 of the casing 22. The mirrors 42 direct light beams towards the coded label so as to form a scanning pattern for reading the coded label in a manner that is well known in the art. The light beams reflected from the coded label are collected by a collection portion 44 of the composite optical member 38, the portion 44 serving to direct the reflected light beams 46 towards a photodetector 48 mounted adjacent the drive shaft 30. The photodetector 48, in response to receiving the reflected light beams from the collection portion 44, generates electrical signals in accordance with the intensity level of the reflected light beams received, which signals are transmitted to a processing member 49 mounted on electrical racks 50 located within the casing 22. Associated with the electrical racks 50 is a power supply 52. A glass face plate 53 covers the front opening of the reader 20 through which the scanning light beams are projected on to the coded label.

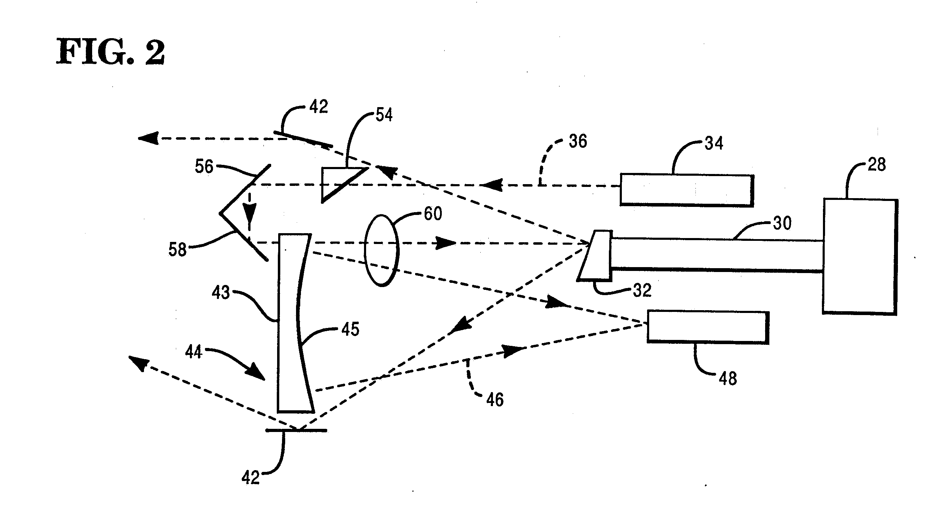

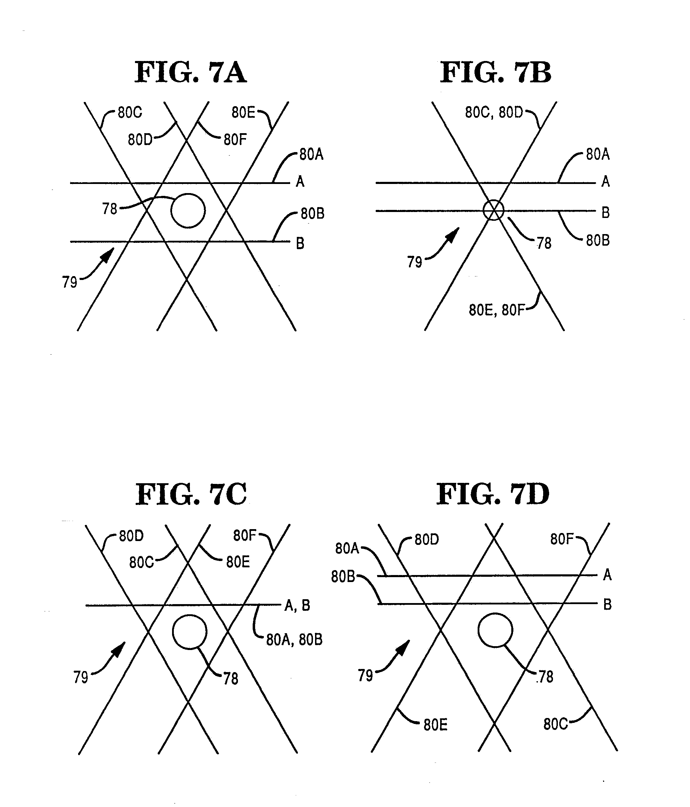

Referring now to Fig. 2, there is shown a diagrammatic representation of the scanning system incorporated in the optical bar code reader 20, with the various components of the scanning system being shown as separate elements. The light beam 36 outputted by the laser diode 34 is directed through a prism 54 along a first axis parallel to the axis of the casing 22, the prism 54 serving to circularize the beam. A pair of mirrors 56 and 58 receive the beam and direct the beam in a generally opposite direction along a second axis on to a focusing lens 60 which focuses the light beam on to the surface of the scanning mirror 32. Rotation of the scanning mirror 32 redirects the light beam in sequence towards the mirrors 42 which in turn direct light beams in a scan pattern 79 (Figs. 7A-7D inclusive) towards the coded label (not shown) on the purchased merchandise item. The light beams reflected from the coded label are gathered by the collection portion 44 which comprises a front vertical surface 43 facing the label and a rear concave surface 45 which focuses the reflected light beams 46 on to the photodetector 48 which generates electrical signals representing the data on the coded label. The problem found with this type of construction in which the components of the scanning system are separate elements is the critical alignment between the prism 54, the mirrors 56 and 58 and the focusing lens 60. In order to reduce this alignment problem and to reduce the weight of the bar code reader 20, the prism 54, the mirrors 56 and 58, the focusing lens 60 and the collection portion 44 are formed into a composite single optical member.

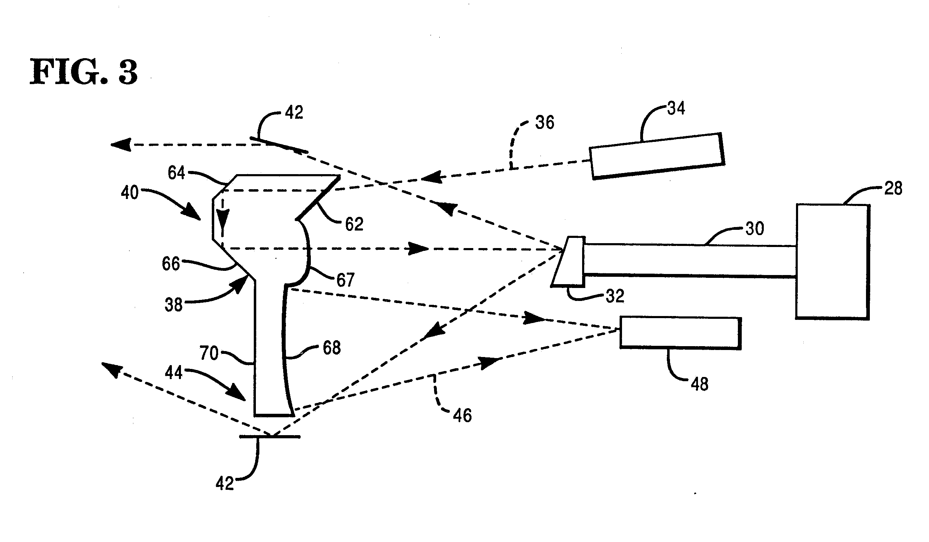

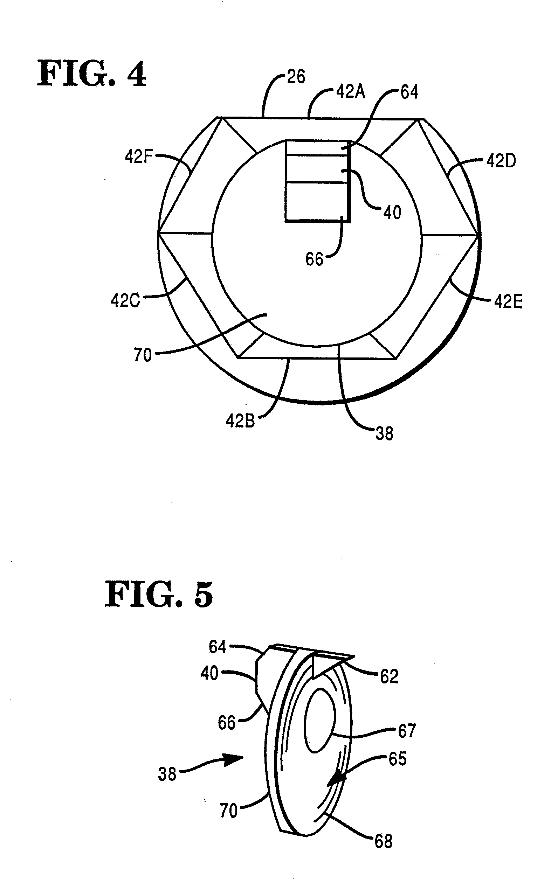

As best seen in Figs. 3 and 5, the composite optical member generally indicated by the numeral 38 is generally in the form of a disc-shaped member which is provided on one side with a top rear portion 62 projecting into the interior of the casing 22 and comprising the prism member 54 (Fig. 2), and which is provided on the other side with a front portion 40. The front portion 40 comprises a pair of inclined internally reflecting surfaces 64 and 66 which extend at right angles to each other and which comprise the mirrors 56 and 58 (Fig. 2). The optical member 38 also includes an aspherical rear portion 67 which forms the focusing lens member 60 (Fig. 2). The main portion of the composite optical member 38 comprises the collection portion 44 which has a rear concave surface 68 facing the detector 48 and a substantially planar front surface 70 facing the coded label for gathering the reflected light beams from the coded label. The concave surface 68 focuses the reflected light beams 46 on the detector 48 in the manner described previously. The paths of the light beams are the same as described with respect to Fig. 2 except that the laser diode 34 is slightly offset with respect to the optical member 38. The composite optical member 38 is a moulded plastic structure.

Referring now to Fig. 4, there is shown a front view of the optical bar code reader 20 showing the planar surface 70 of the composite optical member 38 and the reflecting surfaces 64 and 66. Mounted around the interior periphery of the casing 22 are six mirrors 42A-42F inclusive for directing the light beams in the form of a scanning pattern 79 (Figs. 7A-7D inclusive) through which the coded label passes.

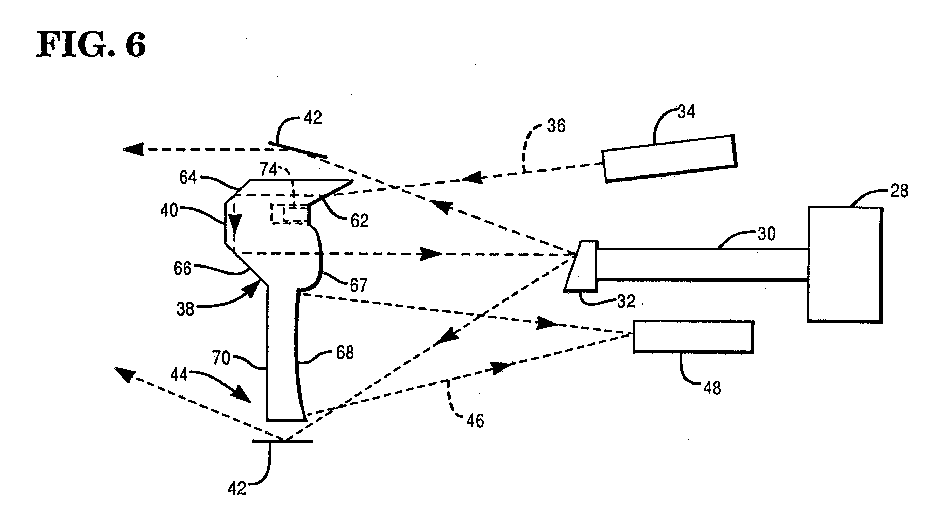

Referring now to Fig. 6, there is shown a diagrammatic illustration of a scanning system which is similar to Fig. 3 in which a light emitting diode (LED) 74 is mounted in the composite optical member 38 for projecting a circular light beam 78 (Figs. 7A-7D inclusive) towards the focal plane through which the coded label is moving. As shown in Figs. 7A-7D inclusive, the circular light beam 78 from the LED 74 will appear adjacent the scan lines 80. As shown in Fig. 7A, the mirrors 42A and 42B (Fig. 4) generate the scan lines 80A and 80B respectively. The upper mirrors 42C and 42D generate the scan lines 80C and 80D respectively while the mirrors 42E and 42F generate the scan lines 80E and 80F respectively. When the scanning pattern is in focus (Fig. 7B) on the plane through which the coded label passes, the scanning lines 80C, 80D and 80E, 80F will coincide in the same plane with the circular light beam 78 appearing at the intersection of the aforementioned scan lines and the scan line 80B. When in focus, the diameter of the light beam 78 will be at its smallest together with the edge of the beam being sharply defined. Fig. 7A represents the condition of the scanning pattern 79 when inside the focal plane, while Figs. 7C and 7D represent the scanning pattern outside the focal plane. It will be seen that the operator utilizing the size and location of the circular light beam 78 with respect to the location of the scan lines can focus the scanning pattern 79 in a manner that is simple and which will not detract from the speed of processing a purchased merchandise item.

**Claims**

1. A hand-held optical bar code reader for projecting scanning light beams at a bar code and detecting the light reflected from the bar code, characterized by an elongated casing (22) having an opening at one end, light source means (34) mounted in said casing for projecting a light beam towards said one end, first reflecting means (64,66) mounted adjacent said one end of said casing (22) for reflecting said light beam away from said one end along a first axis to second reflecting means (32) mounted on a rotatable member (30) mounted in said casing (22), said first axis being substantially coincident with the axis of rotation of said rotatable member, a plurality of third reflecting means (42) mounted around the interior periphery of said casing adjacent said one end, said second reflecting means (32) being arranged in operation to deflect the received light beam in sequence to said plurality of third reflecting means, said third reflecting means serving to direct scanning light beams in a scanning manner at said bar code through said opening, detecting means (48) mounted in said casing (22) adjacent said rotatable member (30), and collection means (44) for collecting light reflected from said coded label and for focusing this reflected light on said detecting means, said detecting means being arranged to generate electrical signals representing data stored in said bar code in response to receiving light reflected from said bar code.

2. A reader according to claim 1, characterized in that said first reflecting means comprises a pair of optical surfaces (64, 66) orientated at right angles with respect to each other.

3. A reader according to either claim 1 or claim 2, characterized in that said first reflecting means (64, 66) and said collection means (44) each form part of a single optical member (38).

4. A reader according to claim 3, characterized in that said optical member (38) includes a portion (67) which faces said second reflecting means (36) and which serves to focus the light beam reflected by said first reflecting means (64, 66) on to said second reflecting means (32).

5. A reader according to either claim 3 or claim 4, characterized in that said collection means (44) includes a first, planar surface (70) of said optical member (38) for collecting light reflected from said bar code, and a second, concave surface (68) of said optical member for focusing the collected light on said detecting means (48).

6. A reader according to any one of claims 3 to 5, characterized in that said optical member (38) includes a portion (62) which acts as a prism and through which the light beam from said light source means (34) passes prior to reaching said first reflecting means (64, 66).

7. A reader according to any one of claims 3 to 6, characterized in that said optical member (38) is generally in the form of a disc-shaped member provided on one side with a first projecting portion (62) which projects into the interior of said casing (22) and which serves as said prism, and which is provided on the other side with a second projecting portion (40) which serves as said first reflecting means (64, 66).

8. A reader according to any one of claims 3 to 7, characterized in that said optical member (38) is of moulded plastic.

9. A reader according to any one of claims 3 to 8, characterized by a further light source means (74) mounted in said optical member (38) and arranged to focus a spot of light on said bar code for use in bringing about correct scanning of said bar code by said scanning light beams.

10. A reader according to any one of the preceding claims, characterized by an electric motor (28) mounted in said casing (22) for rotating said rotatable member (30) in operation.

# FIG. 1

FIG. 2

FIG. 3

# FIG. 4

26

42A

64

42F

42D

40

66

42C

42E

70

42B

38

# FIG. 5

64

40

62

66

38

67

65

70

68

# FIG. 6

# FIG. 7A

80C
80D
80E
80F
80A
A
78
80B
B
79

# FIG. 7B

80C, 80D
80A
A
B
78
80B
79
80E, 80F

# FIG. 7C

80D
80C
80F
80E
A, B
80A, 80B
79
78

# FIG. 7D

80A
80B
80D
80F
A
B
79
78
80E
80C